# EUROPEAN PATENT APPLICATION

(11) **EP 4 800 163 A1**
(43) Date of publication of application: **02.09.2026**
(21) Application number: 25893277.1
(22) Date of filing: 09.05.2025
(51) Int. Cl.: C25C 7/00, C25C 7/04, C25C 7/02, C25C 3/34

(54) **APPARATUS FOR ELECTROLYTIC RECOVERY OF ANTIMONY AND METHOD FOR ELECTROLYTIC RECOVERY OF ANTIMONY USING SAME**

(30) Priority: 13.12.2024 KR 20240186132
(71) Applicant: Korea Zinc Co., Ltd., Seoul 03159 (KR)
(72) Inventor: KIM, Byung Moon, Ulsan 44753 (KR); CHOI, Heon Sik, Ulsan 44696 (KR)
(74) Representative: Angerhausen, Christoph
(86) International application number: PCT/KR2025/006283
(87) International publication number: WO 2026/127222

(57) **Abstract**

Provided herein is an electrolytic recovery apparatus that electrolytically recovers antimony from an antimony-containing solution, the apparatus including an electrolysis tank configured to store the solution; at least one cathode arranged inside the electrolysis tank; at least one anode arranged inside the electrolysis tank; and at least one diaphragm configured to separate a cathode-side region including the at least one cathode from an anode-side region including the at least one anode, and an electrolytic recovery method of antimony including (A) leaching an antimony-containing raw material in a leaching solution to produce a leachate containing antimony; and (B) electrodepositing antimony by introducing the leachate into the electrolytic recovery apparatus described above.

## Description

### TECHNICAL FIELD

The present disclosure relates to an electrolytic recovery apparatus for antimony and an electrolytic recovery method for antimony using the same.

### BACKGROUND ART

Antimony (Sb) is attracting attention as a material for compound semiconductors, and a demand thereof is increasing. Conventionally, crude antimony has been produced through a pyrometallurgical process using stibnite (Sb₂S₃), which is an antimony-containing raw material, and then, antimony is obtained through processes such as electrolysis.

However, in the case of antimony production through a pyrometallurgical process, issues such as significant antimony losses during production, high energy consumption required for antimony recovery, and air pollution emissions due to the operation of a pyrometallurgical furnace for the pyrometallurgical process have arisen.

### DISCLOSURE

### TECHNICAL PROBLEM

The present disclosure aims to provide an electrolytic recovery apparatus and method for antimony that reduce antimony losses, energy consumption, and air pollution emissions compared to a pyrometallurgical method.

Further, the present disclosure aims to provide an electrolytic recovery apparatus and method for antimony that are capable of preventing a decrease in antimony recovery rate caused by the re-dissolution of electrodeposited antimony due to reaction by-products (e.g., thiosulfate) during electrolytic recovery of antimony.

Furthermore, the present disclosure aims to provide an electrolytic recovery apparatus and method for antimony that are capable of increasing current efficiency while reducing the occurrence of short-circuit during electrolysis.

Moreover, the present disclosure aims to provide an electrolytic recovery method for antimony that enables the reuse of the small amount of solution generated during electrolysis as a leaching solution, thereby reducing the usage of auxiliary materials and overall process costs.

### TECHNICAL SOLUTION

Various embodiments of the present disclosure are related to an electrolytic recovery apparatus that electrolytically recovers antimony from an antimony-containing solution, the apparatus including: an electrolysis tank configured to store the solution; at least one cathode arranged inside the electrolysis tank; at least one anode arranged inside the electrolysis tank; and at least one diaphragm configured to separate a cathode-side region including the at least one cathode from an anode-side region including the at least one anode.

In the electrolyte recovery apparatus according to an embodiment of the present disclosure, the diaphragm may be made of a polymer that enables ion exchange.

In the electrolyte recovery apparatus according to an embodiment of the present disclosure, the diaphragm may separate a catholyte from an anolyte.

In the electrolyte recovery apparatus according to an embodiment of the present disclosure, the anode and an anolyte may be arranged inside the diaphragm, and the cathode and a catholyte may be arranged outside the diaphragm.

In the electrolyte recovery apparatus according to an embodiment of the present disclosure, a level of the anolyte inside the diaphragm may be lower than a level of the catholyte outside the diaphragm.

In the electrolyte recovery apparatus according to an embodiment of the present disclosure, the diaphragm may be fixed by a frame and may be mounted inside the frame.

In the electrolyte recovery apparatus according to an embodiment of the present disclosure, a rim portion of the diaphragm may be stitched and masked.

In the electrolyte recovery apparatus according to an embodiment of the present disclosure, the cathode may be formed as a flat cathode plate, and a plurality of holes or recesses may be formed in a surface of the cathode plate
In the electrolyte recovery apparatus according to an embodiment of the present disclosure, the plurality of recesses may be formed to extend in a longitudinal direction of the cathode plate and may be regularly arranged in a transverse direction of the cathode plate.

In the electrolyte recovery apparatus according to an embodiment of the present disclosure, the plurality of recesses may be grid-patterend recesses obtained by combining a plurality of rows of recesses extending in a longitudinal direction of the cathode plate with a plurality of rows of recesses extending in a transverse direction of the cathode plate.

In the electrolyte recovery apparatus according to an embodiment of the present disclosure, the plurality of holes may be regularly arranged in a two-dimensional grid-like arrangement.

In the electrolyte recovery apparatus according to an embodiment of the present disclosure, a width of the hole or recess may be between 2 mm and 15 mm.

In the electrolyte recovery apparatus according to an embodiment of the present disclosure, a spacing between the plurality of holes or recesses may be uniform.

In the electrolyte recovery apparatus according to an embodiment of the present disclosure, a spacing between the plurality of holes or recesses may be between 2 cm and 5 cm.

In the electrolyte recovery apparatus according to an embodiment of the present disclosure, the anode may include a plurality of electrode rods extending in a longitudinal direction.

In the electrolyte recovery apparatus according to an embodiment of the present disclosure, a diameter of the electrode rod may be between 2 mm and 25 mm.

In the electrolyte recovery apparatus according to an embodiment of the present disclosure, a spacing between the electrode rods may be uniform.

In the electrolyte recovery apparatus according to an embodiment of the present disclosure, a number of electrode rods may be between 10 and 15.

In the electrolyte recovery apparatus according to an embodiment of the present disclosure, a surface area of the anode may be equal to or less than 30% of a surface area of the cathode.

In the electrolyte recovery apparatus according to an embodiment of the present disclosure, antimony may be electrodeposited on the cathode.

Various embodiments of the present disclosure are related to an electrolytic recovery method of electrolytically recovering antimony from an antimony-containing solution, the method including: (A) leaching process comprising leaching an antimony-containing raw material in a leaching solution to produce a leachate containing antimony; and (B) electrolytic process comprising electrodepositing to electrodeposit antimony by introducing the leachate into the electrolytic recovery apparatus described above.

In the electrolyte recovery method according to an embodiment of the present disclosure, the antimony-containing raw material may be antimony trioxide (Sb₂O₃), antimony trisulfide (Sb₂S₃), or a mixture thereof.

In the electrolyte recovery method according to an embodiment of the present disclosure, the leaching solution may be sodium hydroxide (NaOH), sodium hydrosulfide (NaSH), or a mixture thereof.

In the electrolyte recovery method according to an embodiment of the present disclosure, the leachate may contain Na₃SbS₃.

In the electrolyte recovery apparatus according to an embodiment of the present disclosure, sodium hydroxide and sodium hydrosulfide are recovered in the electrolytic process and are reused as the leaching solution in the leaching process.

### ADVANTAGEOUS EFFECTS

According to the present disclosure, an antimony-containing raw material is leached in an electrolyte effluent, thereby reducing antimony losses, energy consumption, and air pollution emissions compared to a pyrometallurgical method.

According to the present disclosure, the inclusion of a diaphragm prevents mixing of an electrolyte between an anode and a cathode, thereby preventing the re-dissolution of antimony due to reaction by-products (e.g., thiosulfate).

According to the present disclosure, the use of a specifically structured cathode and anode may enhance current efficiency during electrolysis.

According to the present disclosure, the occurrence of short-circuit may be reduced by appropriately adjusting the arrangement of a diaphragm.

According to the present disclosure, the small amount of solution generated during electrolysis is reused as a leaching solution for antimony, thereby reducing the usage of auxiliary materials and overall process costs. The reuse of the small amount of solution may reduce the amount of new electrolyte required, as well as the amount of wastewater generated during the addition of new electrolyte, thereby achieving environmentally friendly effects.

### DESCRIPTION OF DRAWINGS

FIG. 1 is a diagram illustrating the overall process of electrolytic recovery for antimony according to an embodiment of the present disclosure.
FIG. 2 is a schematic diagram of an electrolytic recovery apparatus for electrolytically recovering antimony according to an embodiment of the present disclosure.
FIG. 3 is a schematic diagram illustrating a configuration in which a diaphragm included in the electrolytic recovery apparatus is mounted inside a frame, according to the embodiment of the present disclosure.
FIG. 4 is a schematic diagram illustrating a cathode plate included in the electrolytic recovery apparatus according to the embodiment of the present disclosure.
FIG. 5 is a schematic diagram illustrating an anode included in the electrolytic recovery apparatus according to the embodiment of the present disclosure.
FIG. 6 is a photograph illustrating a structure in which a cathode is arranged inside the diaphragm.
FIG. 7 is a photograph illustrating the cathode with electrodeposited antimony, when the anode is arranged inside the diaphragm and the diaphragm is mounted outside the frame.
FIG. 8 is a photograph comparing the electrodeposition results when the shape of the cathode plate is varied.
FIG. 9 is a photograph comparing the electrodeposition results when the shape of the cathode plate is varied.
FIG. 10 is a photograph comparing the electrodeposition results when the shape of the anode is varied.

### MODE FOR INVENTION

Embodiments of the present disclosure are illustrated for the purpose of explaining the technical idea of the present disclosure. The scope of the rights according to the present disclosure is not limited to the embodiments presented below or the detailed descriptions of such embodiments.

Embodiments of the present disclosure are illustrated for the purpose of explaining the technical idea of the present disclosure. The scope of the rights according to the present disclosure is not limited to the embodiments presented below or the detailed descriptions of such embodiments.

In this specification, the longitudinal direction of "A" refers to the vertical direction of "A", and the transverse direction of "A" refers to the horizontal direction of "A". The longitudinal direction and the transverse direction of "A" are perpendicular to each other.

Hereinafter, the present disclosure will be described with reference to the drawings.

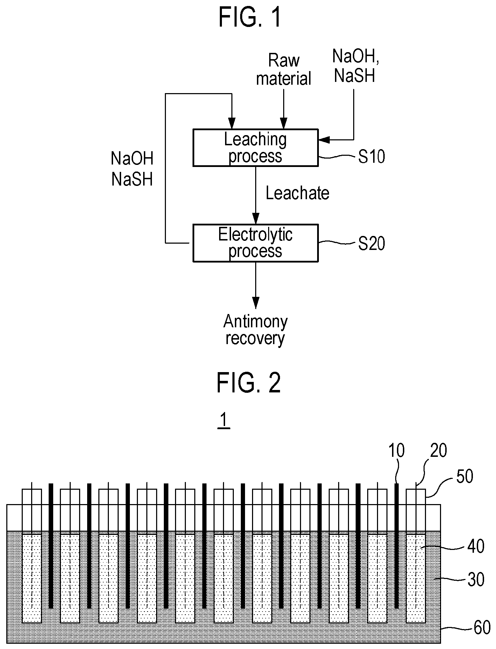

FIG. 1 is a diagram illustrating the overall process of electrolytic recovery for antimony according to an embodiment of the present disclosure.

Referring to FIG. 1, a method may be provided, in which an antimony-containing raw material is leached through a series of processs, and antimony is electrolytically recovered through an electrolytic process. According to this method, antimony may be recovered with high efficiency even at low energy consumption, and the usage of auxiliary materials and process costs may be reduced. Hereinafter, the respective processs will be described in detail with reference to FIG. 1.

### Leaching Process (S10)

Referring to FIG. 1, an electrolytic recovery method for electrolytically recovering antimony from an antimony-containing solution according to an embodiment of the present disclosure includes a leaching process (S10) in which an antimony-containing raw material is leached in a leaching solution to produce a leachate containing antimony.

For example, the antimony-containing raw material may be antimony trioxide (Sb₂O₃), antimony trisulfide (Sb₂S₃), or a mixture thereof.

For example, the leaching solution may be sodium hydroxide (NaOH), sodium hydrosulfide (NaSH), or a mixture thereof.

For example, when antimony trioxide is leached in sodium hydroxide and sodium hydrosulfide, the leachate may contain Na₃SbS₃, and may be, for example, an aqueous Na₃SbS₃ solution. The dissolution reaction during the leaching process may be represented by the following Reaction Formula 1.

[Reaction Formula 1] Sb₂O₃ + 6NaSH + 6NaOH → 2Na₃SbS₃ + 6NaOH + 3H₂O

Since sodium hydroxide produced by the reaction may be reused as a leaching solution, the usage of auxiliary materials is reduced.

The produced aqueous Na₃SbS₃ solution may then be used to electrodeposit antimony through an electrolytic process (S20), which will be described later, thus enabling the recovery of metallic antimony, for example. At this time, since sodium hydrosulfide is also produced along with sodium hydroxide and both may be reused as a leaching solution, the overall amount and usage of auxiliary materials are reduced, which may reduce process costs.

For example, when antimony trisulfide is leached in sodium hydroxide and sodium hydrosulfide, the resulting leachate may contain Na₃SbS₃, and may be, for example, an aqueous Na₃SbS₃ solution. The dissolution reaction during the leaching process may be represented by the following Reaction Formula 2.

[Reaction Formula 2] ₂S₃ + 3NaSH + 3NaOH → 2Na₃SbS₃ + 3H₂O

Sb

The produced aqueous Na₃SbS₃ solution may then be used to electrodeposit antimony through the electrolytic process (S20), which will be described later, thus enabling the recovery of metallic antimony, for example. At this time, since sodium hydrosulfide is also produced along with sodium hydroxide and both may be reused as a leaching solution, the overall amount and usage of auxiliary materials are reduced, which may reduce process costs.

Further, in the case of antimony trisulfide as well, sodium hydrosulfide is also produced along with sodim hydroxide through the electrolytic process (S20), which will be described later, and considering Reaction Formula 2, it can be seen that the amount of sodium hydrosulfide (NaSH) actually increases through the electrolytic process (see Reaction Formula 3). Therefore, when the concentration of sodium hydrosulfide in the leaching solution and electrolyte decreases, leaching and electrolyzing antimony trisulfide may be used to produce sodium hydrosulfide, thereby enabling adjustment of the sodium hydrosulfide concentration.

As such, since almost no additional auxiliary materials are required during the leaching and electrolytic deposition of antimony in sodium hydroxide and sodium hydrosulfide, only an initial charge of materials is needed and may be continuously reused as a leaching solution and electrolyte.

### Electrolytic Process (S20)

Referring to FIG. 1, the electrolytic recovery method for electrolytically recovering antimony from an antimony-containing solution according to the embodiment of the present disclosure includes the electrolytic process (S20) in which the leachate from the leaching process (S10) is introduced into an electrolytic recovery apparatus, which will be described later, to electrodeposit antimony.

The electrolytic reaction formula of the electrolytic process (S20) is represented by the following Reaction Formula 3.

[Reaction Formula 3] 2Na₃SbS₃ + 6NaOH + 3H₂O → 2Sb + 6NaSH + 6NaOH + 3/2O₂

In the electrolytic process (S20), sodium hydroxide and sodium hydrosulfide may be recovered so as to be reused as a leaching solution in the leaching process (S10).

However, during the electrolytic process, if sodium hydrosulfide is oxidized in an electrolysis tank, Na₂S₂ may be produced (see Reaction Formula 4), and oxidation of Na₂S₂ may produce thiosulfate (Na₂S₂O₃) (see Reaction Formula 5).

[Reaction Formula 4] 4NaSH + O₂ → 2Na₂S₂ + 2H₂O

[Reaction Formula 5] 2Na₂S₂ + 3O₂ → 2Na₂S₂O₃

Na₂S₂ and thiosulfate (Na₂S₂O₃) produced by Reaction Formulas 4 and 5 may re-dissolve antimony electrodeposited on a cathode (see Reaction Formulas 6 and 7). Thus, the production of Na₂S₂ and thiosulfate causes a decrease in current efficiency and antimony recovery rate.

[Reaction Formula 6] 3Na₂S₂ + 2Sb → 2Na₃SbS₃

[Reaction Formula 7] 3Na₂S₂O₃ + 2Sb + 3Na₂S → 2Na₃SbS₃ + 3Na₂SO₃

Therefore, in the present disclosure, an electrolytic recovery apparatus including a diaphragm is used to prevent the mixing of Na₂S₂ and thiosulfate through diaphragm separation, thereby reducing the re-dissolution of antimony.

FIG. 2 is a schematic diagram of an electrolytic recovery apparatus for electrolytically recovering antimony according to an embodiment of the present disclosure.

Referring to FIG. 2, the electrolytic recovery apparatus (1) for electrolytically recovering antimony from an antimony-containing solution according to an embodiment of the present disclosure includes an electrolysis tank (60) for storing the solution, at least one cathode (10) arranged inside the electrolysis tank (60), at least one anode (20) arranged inside the electrolysis tank (60), and at least one diaphragm (50) for separating a cathode-side region including the at least one cathode (10) from an anode-side region including the at least one anode (20).

### Diaphragm (50)

A process executed by the electrolytic recovery apparatus (1) is an electrolytic recovery process by a diaphragm method (diaphragm electrolysis) using the diaphragm (50), where the diaphragm (50) may be made of a polymer that allows ion exchange.

For example, the diaphragm (50) may be made of polypropylene (PP), which may maintain high chemical stability and durability in alkaline solutions.

For example, the diaphragm (50) may have an air permeability of 0.2 cc/cm²·s or less, minimizing liquid exchange between the inside and outside of the diaphragm, while still allowing ion exchange to ensure stable separation performance.

For example, the diaphragm (50) may separate a catholyte (30) from an anolyte (40). In the electrolysis of FIG. 1 described above, oxidation of sodium hydrosulfide (NaSH) and Na₂S₂ in the electrolyte may produce Na₂S₂ and thiosulfate (Na₂S₂O₃), ultimately resulting in the production of thiosulfate (see Reaction Formulars 4 and 5).

[Reaction Formula 4] 4NaSH + O₂ → 2Na₂S₂ + 2H₂O

[Reaction Formula 5] 2Na₂S₂ + 3O₂ → 2Na₂S₂O₃

Na₂S₂ and thiosulfate (Na₂S₂O₃) produced by Reaction Formulas 4 and 5 may re-dissolve antimony electrodeposited on the cathode (10) (see Reaction Formulas 6 and 7). Thus, the production of Na₂S₂ and thiosulfate causes a decrease in current efficiency and antimony recovery rate.

[Reaction Formula 6] 3Na₂S₂ + 2Sb → 2Na₃SbS₃

[Reaction Formula 7] 3Na₂S₂O₃ + 2Sb + 3Na₂S → 2Na₃SbS₃ + 3Na₂SO₃

To address this issue, the present disclosure performs separation of the cathode-side region and the anode-side region by the diaphragm (50), thereby preventing the mixing of Na₂S₂ and thiosulfate into the cathode-side region including the cathode (10) with electrodeposited antimony, which may reduce the re-dissolution of antimony.

For example, the anode (20) and the anolyte (40) may be arranged inside the diaphragm (50), while the cathode (10) and the catholyte (30) may be arranged outside the diaphragm (50). For example, (unlike the illustration of FIG. 2), the cathode (10) and the catholyte (30) may be arranged inside the diaphragm (50), while the anode (20) and the anolyte (40) may be arranged outside the diaphragm (50). For example, the anolyte (40) and the catholyte (30) may be the same.

The effects observed may depend on whether the cathode (10) or the anode (20) is arranged inside the diaphragm (50).

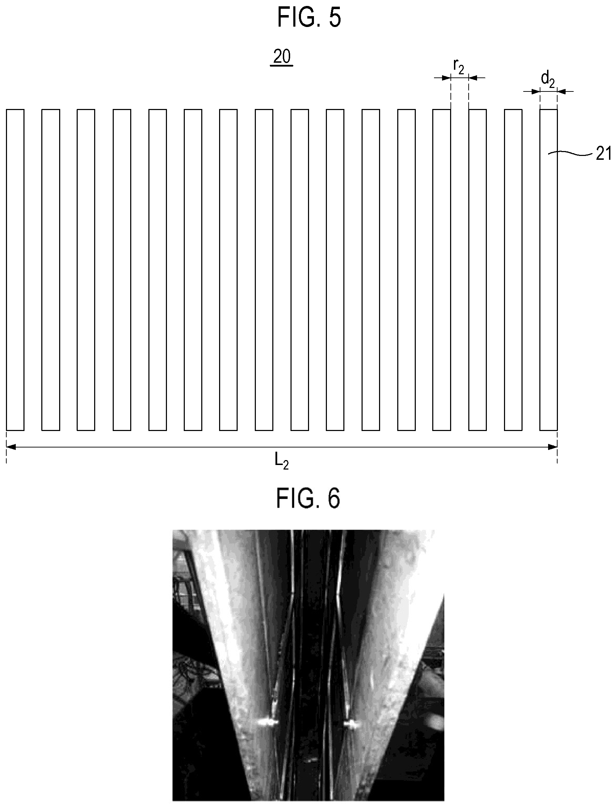

For example, when the cathode is arranged inside the diaphragm, the diaphragm may swell due to antimony electrodeposition on the cathode, or antimony electrodeposited on the cathode may detach and fall to the bottom of the diaphragm (see FIG. 6). Therefore, short-circuit for the electrolysis tank is required to remove an antimony plate that has fallen to the bottom of the diaphragm, and the process may not be resumed until the antimony plate is removed, which may reduce productivity.

Further, the swelling of the diaphragm may cause short-circuit between the diaphragm and the cathode, and antimony deposited on a frame in which the diaphragm is arranged may lead to a decrease in antimony recovery rate. Furthermore, antimony deposited on the frame may exacerbate short-circuit between the cathode and the diaphragm.

On the other hand, as illustrated in FIG. 2, when the anode (20) is arranged inside the diaphragm (50), no short-circuit due to the falling of the antimony plat occurs because the antimony plate falls to the bottom of the electrolysis tank (60) even if the antimony plate deposited on the cathode (10) falls due to factors such as weight.

For example, the level of the anolyte (40) inside the diaphragm (50) may be lower than the level of the catholyte (30) outside the diaphragm (50). By maintaining the level of the catholyte (30) higher than the anolyte (40), the amount of the catholyte (30) flowing into the anolyte (40) through the diaphragm (50) may be reduced (for example, limiting to approximately 10% by volume or less relative to the amount of newly introduced catholyte into the electrolysis tank). This helps prevent mixing between the catholyte (30) and the anolyte (40). Accordingly, Na₂S₂ and thiosulfate (Na₂S₂O₃) produced in the anode-side region may be prevented from mixing into the cathode-side region, which may reduce the re-dissolution of antimony deposited on the cathode (10).

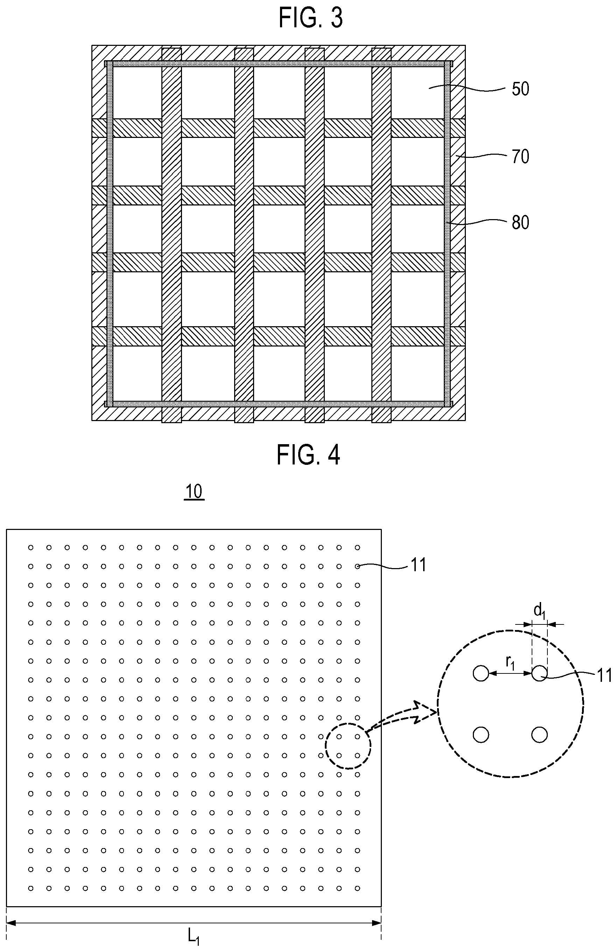

FIG. 3 is a schematic diagram illustrating a configuration in which the diaphragm included in the electrolytic recovery apparatus is mounted inside the frame according to the embodiment of the present disclosure.

Referring to FIGS. 2 and 3, the diaphragm (50) may be fixed by a frame (70) and may be mounted inside the frame (70). For example, (unlike the illustration of FIG. 3) the diaphragm may be fixed to the frame and may be mounted outside the frame.

The effects observed depend on whether the diaphragm (50) is mounted either outside or inside the frame (70).

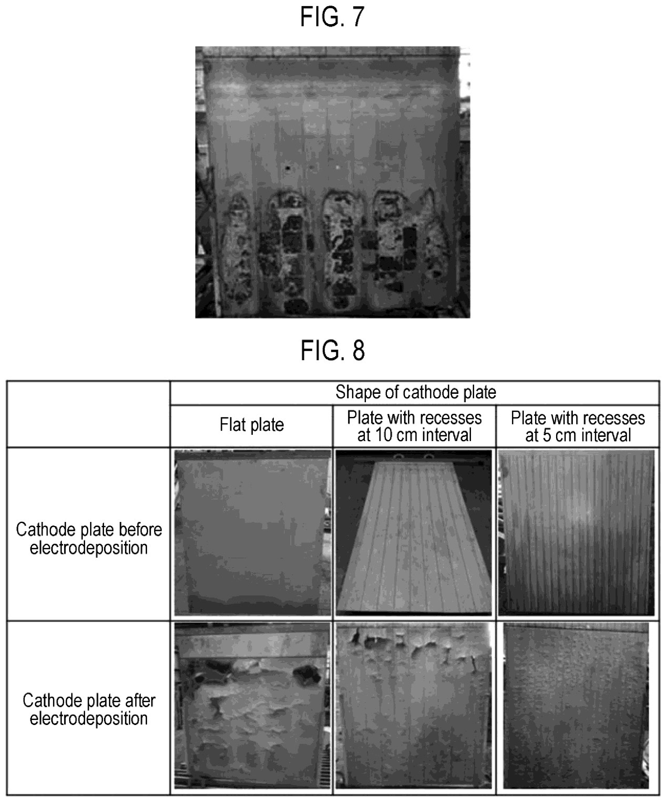

For example, when the diaphragm is mounted outside the frame, swelling may occur at the bottom of the diaphragm. Accordingly, the diaphragm and the cathode may come into contact with each other, causing the occurrence of short-circuit, which may reduce the production efficiency of antimony deposited on the cathode (see FIG. 7).

Therefore, by arranging the anode (20) inside the diaphragm (50) and mounting the diaphragm (50) inside the frame (70), the occurrence of short-circuit may be reduced, and short-circuit caused by the falling of the antimony plate from the cathode (10) may be prevented. Furthermore, when the diaphragm is mounted outside the frame, outside bending work requires the work of two or more operators. In contrast, when the diaphragm (50) is mounted inside the frame (70), only the replacement of the diaphragm (50) performed by a single operator is required, which provides ease of operation.

For example, a rim portion of the diaphragm (50) may be subjected to stitching and masking (80). Specifically, the rim portion of the diaphragm (50) may be precisely stitched using durable threads to prevent leakage initially, and additional masking may be applied to block any tiny gaps that may not be fully sealed by stitching alone.

If stitching and masking are not applied, even a small gap (leak) may exist, leading to potential re-dissolution, which makes the operation difficult.

### Cathode (10)

For example, antimony may be electrodeposited on the cathode (10).

For example, the material of the cathode (10) is not particularly limited as long as it is commonly used in the industry, but may be stainless steel or others. For example, the stainless steel may be SUS316 or SUS304.

FIG. 4 is a schematic diagram illustrating a cathode plate included in the electrolytic recovery apparatus according to the embodiment of the present disclosure.

Referring to FIGS. 2 and 4, the cathode (10) may be formed as a plate-shaped cathode, i.e., a cathode plate, and a plurality of holes (11) or recesses (not illustrated in FIG. 4) may be formed in the surface of the cathode plate. Although not illustrated in FIG. 4, the cathode plate may also be in the form of a flat plate without any holes or recesses (see FIG. 8).

Although not illustrated in FIG. 4, for example, the plurality of recesses may be formed to extend in the longitudinal direction of the cathode plate and may be regularly arranged in the transverse direction of the cathode plate (see FIG. 8). For example, the plurality of recesses may be formed to extend in the transverse direction of the cathode plate and may be regularly arranged in the longitudinal direction of the cathode plate.

For example, the cross-section of the recess may have a U-shape or a polygonal shape. For example, the cross sections of the plurality of recesses may be all the same or different.

For example, the plurality of recesses may be grid-patterned recesses obtained by combining a plurality of rows of recesses extending in the longitudinal direction of the cathode plate with a plurality of rows of recesses extending in the transverse direction of the cathode plate. The plurality of rows of recesses extending in the longitudinal direction of the cathode plate may be regularly arranged in the transverse direction of the cathode plate, and the plurality of rows of recesses extending in the transverse direction of the cathode plate may be regularly arranged in the longitudinal direction of the cathode plate.

For example, the width of the recess may be between 2 mm and 15 mm, but is not limited thereto.

For example, the width of the recess may be within a range of 0.5% to 2% on the basis of the length of the cathode plate in the transverse direction.

For example, the spacing between the recesses may be uniform.

For example, the spacing between the recesses may be between 2 cm and 5 cm, but is not limited thereto.

For example, the spacing between the recesses may be 3 to 8 times the width of the recesses.

For example, the shape of the plurality of holes (11) may be circular as illustrated in FIG. 4, or may be polygonal. For example, the shapes of the respective holes (11) may be all the same as illustrated in FIG. 4, or may be different.

For example, the plurality of holes (11) may be regularly arranged in a two-dimensional grid-like arrangement.

For example, the diameter d₁ of the hole may be between 2 mm and 15 mm, but is not limited thereto.

For example, the diameter d₁ of the hole may be within a range of 0.5% to 2% on the basis of the length L₁ of the cathode plate in the transverse direction.

For example, the spacing r₁ between the plurality of holes (11) may be uniform.

For example, the spacing r₁ between the plurality of holes (11) may be between 2 cm and 5 cm, but is not limited thereto.

For example, the spacing r1 between the plurality of holes (11) may be 3 to 8 times the diameter d₁ of the holes (11).

When the spacing between the holes or the recesses falls within the above-described range, it may prevent issues where excessively wide spacing makes it difficult for antimony to be electrodeposited, or overly narrow spacing requires excessive force to detach the electrodeposited antimony from the cathode plate using a hammer or similar tool, which may cause damage to both the cathode plate and the hammer due to the impact during detachment.

### < Experimental Example 1>

To examine the difference in effectiveness based on the presence of recesses and the ratio of the spacing between the recesses to the recess width, the electrodeposition results were compared using a flat cathode plate and cathode platea with 10 mm width recesses (grooves) and different spacings (see FIG. 8).

First, when a flat cathode plate was used, the surface of antimony electrodeposited on the cathode plate exhibited pronounced flaking, resembling fallen leaves, and the electrodeposition efficiency of antimony was considerably low. This is believed to be due to poor uniformity of the electrodeposited surface during electrolytic deposition. Thus, the antimony deposited on the cathode plate often detached and fell to the bottom of the electrolysis tank, making recovery more difficult.

Next, when a cathode plate with straight grooves spaced at 10 cm intervals was used, the electrodeposition efficiency was somewhat improved compared to the flat cathode plate, but the surface still exhibited some roughness and cracking similar to tree bark.

Meanwhile, when a cathode plate with straight grooves spaced at 5 cm intervals was used, the surface still remained somewhat rough and exhibited cracks, but the electrodeposition efficiency was further improved compared to the cathode plate with grooves spaced at 10 cm intervals.

### < Experimental Example 2>

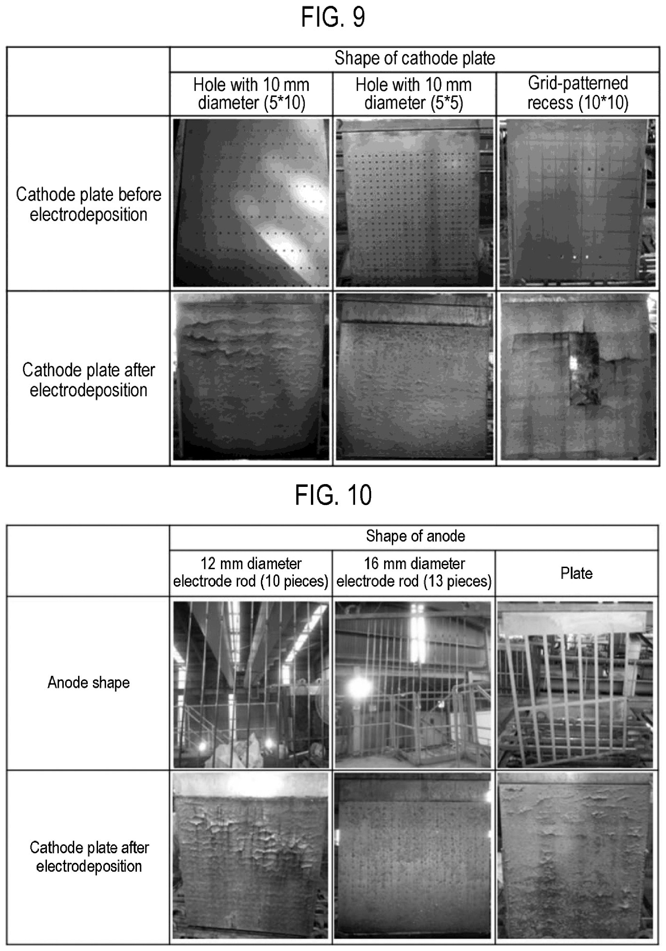

To compare the effects of forming recesses versus holes and to evaluate the differences based on different hole arrangements, the electrodeposition results were compared using a cathode plate with grid-patterned recesses of 10 mm width and cathode plates with 10 mm diameter holes spaced at different intervals (see FIG. 9).

First, when a cathode plate with grid-patterned recesses was used, a phenomenon was observed in which electrodeposited antimony detached in square fragments. This indicates that while the grid-patterned recesses contributed to the initial formation of deposits, they exhibited limitations in terms of the structural stability of an electrodeposited layer.

Next, when a cathode plate with 10 mm diameter circular holes arranged regularly at 5×10 cm intervals was used, it could be confirmed that the detachment of electrodeposited antimony was greatly reduced compared to the case of grid-patterned recesses, although the surface remained somewhat rough. This indicates that forming holes may improve the adhesion of deposits to the cathode plate.

Meanwhile, when a cathode plate with 10 mm diameter holes regularly arranged at 5×5 cm intervals was used, it could be confirmed that almost no detachment was observed on the electrodeposited surface, and the uniformity and stability of electrodeposition were greatly improved. This indicates that the adhesion of deposits to the cathode plate was significantly enhanced, and excellent surface quality was achieved.

### Anode (20)

For example, the material of the anode (20) is not particularly limited as long as it is commonly used in the industry, but may be stainless steel or others. For example, the stainless steel may be SUS316 or SUS304.

FIG. 5 is a schematic diagram illustrating the anode included in the electrolytic recovery apparatus according to the embodiment of the present disclosure.

Referring to FIGS. 2 and 5, the anode (20) may include a plurality of electrode rods (21) extending in the longitudinal direction. The anode (20) having a rod structure may reduce the surface area thereof, and for example, the surface area of the anode (20) may be equal to or less than 30% of the surface area of the cathode (10). For example, the surface area of the anode (20) may be equal to or greater than 5% of the surface area of the cathode (10). This allows for a higher current density compared to cases with the same surface area, thereby increasing current efficiency.

Although not illustrated in FIG. 5, for example, the cross-section of the electrode rod (21) may have a circular, oval or polygonal shape. For example, the cross sections of the plurality of electrode rods (21) may be all the same or different.

For example, the diameter d₂ of the electrode rod (21) may be between 2 mm and 25 mm. For example, the number of electrode rods (21) may be between 10 and 15.

For example, the diameter d₂ of the electrode rod (21) may be within a range of 0.5% to 2% based on the total width L₂ of the anode in the transverse direction.

For example, the spacing r₂ between the electrode rods (21) may be uniform.

For example, the anode (20) may include 10 to 15 electrode rods (21) having the diameter d₂ between 10 mm and 20 mm.

When the diameter and the number of electrode rods (21) fall within the above-described ranges, the electrodeposition efficiency of antimony may be further increased.

### < Experimental Example 3>

To examine the difference in effectiveness based on the shape of the anode and variations in the spacing or diameter of the electrode rods, a plate-shaped anode and anodes with electrode rods of varying diameters and numbers were formed, and the electrodeposition results on the cathode plate were compared (see FIG. 10).

First, when a plate-shaped anode was used, the surface roughness of antimony electrodeposited on the cathode plate was somewhat noticeable, and in some areas, quality deterioration occurred due to non-uniform electrodeposition. This indicates that the plate-shaped anode induced non-uniform conditions in terms of current density and ion movement, resulting in inconsistent formation of deposits.

Next, when an anode with 10 circular electrode rods of 12 mm diameter was used, some cracking and slightly rough surface features resembling tree bark were observed on the antimony surface electrodeposited on the cathode plate. However, it was confirmed that deposits adhered relatively firmly and did not detach easily. This indicates that the rod structure contributed to the stability of deposits by maintaining a consistent balance in the ion distribution of the electrolyte and current density.

Meanwhile, when an anode with 13 circular electrode rods of 16 mm diameter was used, the electrodeposited surface was very smoothly and uniformly formed, enabling flat electrodeposition. This indicates that the anode surface area within an appropriate range properly distributes current density, simultaneously improving both electrodeposition efficiency and surface uniformity.

Although the embodiments of the present disclosure have been described with reference to the accompanying drawings, those skilled in the art to which the present disclosure pertains will appreciate that the present disclosure may be implemented in other specific forms without changing the technical scope or essential characteristics thereof.

Therefore, it should be understood that the embodiments described above are illustrative and are not restrictive in all respects. The scope of the present disclosure is defined not by the detailed description above but by the claims, and all changes or modifications derived from the meaning and scope of the claims and their equivalents should be interpreted as falling within the scope of the present disclosure.

## Claims

1. An electrolytic recovery apparatus that electrolytically recovers antimony from an antimony-containing solution, the apparatus comprising:
an electrolysis tank configured to store the solution;
at least one cathode arranged inside the electrolysis tank;
at least one anode arranged inside the electrolysis tank; and
at least one diaphragm configured to separate a cathode-side region including the at least one cathode from an anode-side region including the at least one anode.

2. The electrolytic recovery apparatus of claim 1, wherein the diaphragm is made of a polymer that enables ion exchange.

3. The electrolytic recovery apparatus of claim 1, wherein the diaphragm separates a catholyte from an anolyte.

4. The electrolytic recovery apparatus of claim 1, wherein the anode and an anolyte are arranged inside the diaphragm, and the cathode and a catholyte are arranged outside the diaphragm.

5. The electrolytic recovery apparatus of claim 4, wherein a level of the anolyte inside the diaphragm is lower than a level of the catholyte outside the diaphragm.

6. The electrolytic recovery apparatus of claim 1, wherein the diaphragm is fixed by a frame and is mounted inside the frame.

7. The electrolytic recovery apparatus of claim 1, wherein a rim portion of the diaphragm is stitched and masked.

8. The electrolytic recovery apparatus of claim 1, wherein the cathode is formed as a flat cathode plate, and
wherein a plurality of holes or recesses are formed in a surface of the cathode plate.

9. The electrolytic recovery apparatus of claim 8, wherein the plurality of recesses are formed to extend in a longitudinal direction of the cathode plate and are regularly arranged in a transverse direction of the cathode plate.

10. The electrolytic recovery apparatus of claim 8, wherein the plurality of recesses are grid-patterend recesses obtained by combining a plurality of rows of recesses extending in a longitudinal direction of the cathode plate with a plurality of rows of recesses extending in a transverse direction of the cathode plate.

11. The electrolytic recovery apparatus of claim 8, wherein the plurality of holes are regularly arranged in a two-dimensional grid-like arrangement.

12. The electrolytic recovery apparatus of claim 8, wherein a width of the hole or recess is between 2 mm and 15 mm.

13. The electrolytic recovery apparatus of claim 8, wherein a spacing between the plurality of holes or recesses is uniform.

14. The electrolytic recovery apparatus of claim 8, wherein a spacing between the plurality of holes or recesses is between 2 cm and 5 cm.

15. The electrolytic recovery apparatus of claim 1, wherein the anode includes a plurality of electrode rods extending in a longitudinal direction.

16. The electrolytic recovery apparatus of claim 15, wherein a diameter of the electrode rod is between 2 mm and 25 mm.

17. The electrolytic recovery apparatus of claim 15, wherein a spacing between the electrode rods is uniform.

18. The electrolytic recovery apparatus of claim 15, wherein a number of electrode rods is between 10 and 15.

19. The electrolytic recovery apparatus of claim 1, wherein a surface area of the anode is equal to or less than 30% of a surface area of the cathode.

20. The electrolytic recovery apparatus of claim 1, wherein antimony is electrodeposited on the cathode.

21. An electrolytic recovery method of electrolytically recovering antimony from an antimony-containing solution, the method comprising:
(A) leaching process comprising leaching an antimony-containing raw material in a leaching solution to produce a leachate containing antimony; and
(B) electrolytic process comprising electrodepositing to electrodeposit antimony by introducing the leachate into the electrolytic recovery apparatus of any one of claims 1 to 20.

22. The electrolytic recovery method of claim 21, wherein the antimony-containing raw material is antimony trioxide (Sb₂O₃), antimony trisulfide (Sb₂S₃), or a mixture thereof.

23. The electrolytic recovery method of claim 21, wherein the leaching solution is sodium hydroxide (NaOH), sodium hydrosulfide (NaSH), or a mixture thereof.

24. The electrolytic recovery method of claim 21, wherein the leachate contains Na₃SbS₃.

25. The electrolytic recovery method of claim 21, wherein sodium hydroxide and sodium hydrosulfide are recovered in the electrolytic process and are reused as the leaching solution in the leaching process.
